# EUROPEAN PATENT SPECIFICATION

(11) **EP 3 621 995 B1**
(45) Date of publication and mention of the grant of the patent: **22.01.2025**
(21) Application number: 18721744.3
(22) Date of filing: 27.04.2018
(51) Int. Cl.: C08F 210/16

(54) **PROCESS FOR ACTIVATING A CATALYST FOR THE POLYMERIZATION OF ETHYLENE**
VERFAHREN ZUR AKTIVIERUNG EINES KATALYSATORS ZUR POLYMERISATION VON ETHYLEN
PROCÉDÉ D'ACTIVATION D'UN CATALYSEUR POUR LA POLYMÉRISATION D'ÉTHYLÈNE

(30) Priority: 12.05.2017 US 201762505556 P
(43) Date of publication of application: 18.03.2020
(73) Proprietor: Basell Poliolefine Italia S.r.l., 20121 Milano (IT)
(72) Inventor: BAITA, Pietro, 44122 Ferrara (IT); LIGUORI, Dario, 44122 Ferrara (IT); MAVRIDIS, Harilaos, Lebanon, Ohio 45036 (US); MORINI, Giampiero, 44122 Ferrara (IT); PICA, Roberta, 44122 Ferrara (IT)
(74) Representative: LyondellBasell
(86) International application number: PCT/EP2018/060916
(87) International publication number: WO 2018/206321

(56) References cited:
- US-A- 6 124 412
- US-B1- 6 187 866

## Description

### FIELD OF THE INVENTION

The present disclosure relates to a process for the activation of a catalyst for the polymerization of ethylene and its mixtures with olefins of the general formula CH₂=CHR, where R is an alkyl, cycloalkyl or aryl radical having 1-12 carbon atoms. The procedure described herein may be a gas-phase process carried out in the presence of a catalyst comprising (a) a solid catalyst component comprising titanium (Ti), magnesium (Mg), a halogen and an electron donor compound comprising one or more ethers, and (b) one or more aluminum alkyl compounds.

### BACKGROUND OF THE INVENTION

Gas-phase polymerization is a technique for the preparation of polyethylene which can be carried out in a fluidized or stirred-bed reactor in the presence of a catalyst, ethylene, fluidization gas and molecular weight regulator such as hydrogen.

Catalyst performance for gas-phase ethylene polymerization activity may depend on the polymerization conditions, such as temperature and pressure. However, once the polymerization conditions are fixed the activity depends strictly on the catalyst system. When the activity of the catalyst system is not satisfactory the amount of catalyst fed to the reactor and/or the residence time may be increased. However, these changes increase the plant operability costs because the increase of catalyst fed means an increase of the cost per unity of polymer produced, while the increase of the residence time means a lower productivity of the plant.

Titanium (Ti) based Ziegler-Natta catalysts may be used for the gas-phase polymerization of ethylene in combination with aluminum alkyl compounds. For instance, U.S. Pat. No. 6,187,866 discloses a gas-phase polymerization process carried out in the presence of a catalyst component comprising a Ti compound and tetrahydrofuran supported on a magnesium (Mg) based compound. Before being introduced in the polymerization reactor, the catalyst component is pre-activated by contacting it sequentially with an aluminum trialkyl compound and then with a chlorinated aluminum alkyl compound. The ratio between the total molar amount of the aluminum alkyls used with respect to the tetrahydrofuran in the catalyst may be about 0.65, while the ratio between the chlorinated aluminum alkyl compound and the trialkyl aluminum compound is higher than 2. These specific amounts and the relative ratios of the various components of the preactivation stage are effective mainly for modulating the melt flow rate (MFR).

The applicant has surprisingly found that catalytic activity may be increased by changing the relative ratio among the reactants.

### SUMMARY OF THE INVENTION

An object of the present disclosure includes a process for pre-activating a catalyst for the polymerization of olefins comprising:
(a) contacting a solid catalyst component (i) comprising a titanium compound, a magnesium compound and an ether with (ii) an aluminum compound of the general formula AlR₃, in which R is a C₁-C₁₀ linear or branched alkyl compound;
(b) contacting the product resulting from step (a) with an aluminum compound (iii) of the general formula AlClₙR₃₋ₙ, in which n ranges from 1 to less than 3 and R is a C₁-C₁₀ linear or branched alkyl, where the process comprises a molar ratio between the aluminum compound (iii) and the aluminum compound (ii) of 2.5 or less and the molar ratio between the sum of aluminum compounds (ii) and (iii) and the ether present in the solid catalyst component (i) is equal to, or lower than, 0.6.

### DETAILED DESCRIPTION OF THE INVENTION

In some embodiments, the aluminum compound (ii) of the formula AlR₃ is selected from compounds in which R is a C₁-C₈ alkyl group, including a linear alkyl group. For instance, compounds for use in the present technology are tri-n-hexyl aluminum and tri-n-octyl aluminum.

In certain embodiments, the aluminum compound (iii) of the formula AlClₙR₃₋ₙ is selected from compounds in which n ranges from 1 to 2 and R is a C₁-C₄ alkyl group. Compounds that may be used in accordance with the present disclosure are ethylaluminum dichloride, diethylaluminum chloride and ethylaluminum sesquichloride.

Preferably, the molar ratio of compounds (iii)/(ii) ranges from 1 to 2.3, more preferably from 1.2 to 2.

Preferably, the molar ratio between the sum of the aluminum compounds (ii) and (iii) and the ether present in the solid catalyst component (i) ranges from 0.30 to 0.55, more preferably from 0.35-0.50.

In a preferred embodiment, the molar ratio between the sum of the aluminum compounds (ii) and (iii) and the ether present in the solid catalyst component (i) ranges from 0.46 to 0.55, and the molar ratio of compounds (iii)/(ii) ranges from 1 to 1.5.

In another preferred embodiment, the molar ratio between the sum of aluminum compounds (ii) and (iii) and the ether present in the solid catalyst component (i) ranges from 0.35 to 0.45, and the molar ratio of compounds (iii)/(ii) ranges from 1.6 to 2.

The use of tri-n-hexyl aluminum as compound (ii) and diethyl aluminum chloride as compound (iii) is preferred.

Preferably, the contacting of the components in step (a) is carried out for a period of time ranging from 20 to 400 minutes, more preferably from 50 to 300 minutes.

Preferably, the contact in step (a) is carried out in a liquid diluent at a temperature ranging from 0 to 90 °C, more preferably from 20 to 70 °C.

In a preferred aspect, the contacting of the components in step (b) is carried out for a period of time shorter than the contact time in (a), such as from 10-300 minutes and preferably from 20-250 minutes. It is also preferred carrying out the contact step (b) at a temperature ranging from 0-90 °C, preferably such as from 20-70 °C. Step (b) may take place in an inert diluent.

The titanium compounds in the solid catalyst component (i) may have the general formula Ti(OR^{I})ₘX_{y-m}, where m is 0-0.5 inclusive, y is the valence of titanium, R^{I} is an alkyl, cycloalkyl or aryl radical having 1-8 carbon atoms, and X is a halogen. For instance, R^{I} can be an ethyl, isopropyl, n-butyl, isobutyl, 2-ethylhexyl, n-octyl and phenyl(benzyl) group, while X may be chlorine.

In certain embodiments, if y is 4, m is from 0-0.02, and if y is 3, m is from 0 to 0.015. In some embodiments, TiCl₄ is used as the titanium compound.

Preferably, the Mg/Ti molar ratio ranges from 7 to 50, more preferably from 10 to 25.

The solid catalyst component (i) also comprises an ether as internal donor. The ether (E) is present in amount such as to give (E)/Ti molar ratios from 4 to 20, preferably from 6 to 16 and more preferably from 10 to 15.

Preferably, ethers such as cyclic alkyl ethers having from 2-6 carbon atoms may be used with tetrahydrofuran being particularly preferred.

In some embodiments the solid catalyst component (i) may comprise a porosity P_{F} (deriving from pores with radius up to 1 µ) as determined using the mercury method of 0.20-0.80 cm³/g, including from 0.30-0.70 cm³/g.

In certain embodiments, the surface area measured by the BET method may be lower than 80, such as from 10-70 m²/g. The porosity as measured by the Brunauer-Emmett-Teller (BET) method may range from 0.10-0.50 cm³/g, including from 0.10-0.40 cm³/g.

The particles of the solid component of the catalyst system may have a spherical morphology and an average diameter ranging from 30-150 µm, including from 40-100 µm. As used herein, "particles having spherical morphology" and related phrases are used to describe particles comprising a ratio between the greater axis and the smaller axis equal to or lower than 1.5, such as lower than 1.3.

In some embodiments, a method for the preparation of spherical components described herein comprises a step (a) in which a compound MgCl₂.mR^{II}OH, where 0.3 ≤ m ≤ 1.7 and R^{II} is an alkyl, cycloalkyl or an aryl radical having 1-12 carbon atoms, is reacted with a titanium compound of the general formula Ti(OR^{I})ₙX₄₋ₙ, in which n, y, X and R^{I} have the same meaning as defined above.

Preferably, MgCl₂.mR^{II}OH comprises a precursor of a Mg dihalide compound for use in the present technology. These compounds can be obtained by mixing alcohol and magnesium chloride in the presence of an inert hydrocarbon immiscible with a spherical adduct under stirring conditions at the melting temperature of the adduct (100-130 °C). The emulsion is quickly quenched, causing the solidification of the adduct in form of spherical particles. Representative methods for the preparation of such spherical adducts are reported, for example, in U.S. Pat. Nos. 4,469,648 and 4,399,054, and WIPO PCT Pat. App. Pub. No. WO 98/44009. Another method involves spray cooling as described in U.S. Pat. Nos. 5,100,849 and 4,829,034. Adducts having a functional alcohol content can be obtained by directly using the selected amount of alcohol directly during the adduct preparation. However, if adducts with increased porosity are required one may first prepare the adducts with more than 1.7 moles of alcohol per mole of MgCl₂, which can then be subjected to a thermal and/or chemical dealcoholation process. The thermal dealcoholation process may be carried out under nitrogen flow at temperatures between 50-150 °C until the alcohol content is reduced to the value ranging from 0.3-1.7. A process of this type is described in EP-A- 395083.

The dealcoholated adducts may also be characterized by a porosity (as measured by the mercury method ), due to pores with radius up to 1µm, ranging from 0.15 to 2.5 cm³/g, preferably from 0.25-1.5 cm³/g.

In some embodiments, in the reaction of step (a) the molar ratio Ti/Mg is stoichiometric or higher; for instance this ratio may be higher than 3, or a large excess of titanium compound is used. In certain embodiments, titanium compounds for use in the present technology are titanium tetrahalides such as TiCl₄. The reaction with the Ti compound can be carried out by suspending the adduct in cold TiCl₄ (such as at a temperature of about 0 °C); the mixture may then be heated up to 80-140 °C and kept at this temperature for 0.5-8 hours, such as 0.5-3 hours. Excess titanium compound that may be present can be separated at high temperatures by filtration or sedimentation and siphoning. The step (a) can be repeated twice or more.

In a subsequent step (b), the intermediate solid may be brought into contact with the ether compound under conditions able to affix it on the solid produced in step (a).

In certain embodiments, the reaction is carried out under conditions such that the ether is added to the reaction mixture alone or in a mixture with other compounds in which it represents the main component in terms of molar concentration. Although not required, the contact may optionally be carried out in a liquid medium such as a liquid hydrocarbon. The temperature at which the contact takes place can vary depending on the nature of the reagents and may range from -10 to 150°C, including from 0- 120 °C. Temperatures that may cause the decomposition or degradation of any specific reagents should be avoided. Also, the time of the treatment can vary depending on other conditions such as nature of the reagents, temperature, concentration, *etc.* As a general indication, the contact step can last from 10 minutes to 10 hours, such as from 0.5-5 hours. In order to further increase the final donor content, this step can optionally be repeated one or more times. At the end of this step, the solid is recovered by separation of the suspension via the conventional methods (such as settling and removing of the liquid, filtration, centrifugation, *etc*.) and can be subject to washings with solvents. Although the washings may be carried out with inert hydrocarbon liquids, it is also possible to use more polar solvents (having, for example, a higher dielectric constant) such as halogenated or oxygenated hydrocarbons.

In a preferred embodiment, a further the step (c) is carried out where the solid product recovered from step (b) is subject to a thermal treatment at temperatures ranging from 70 to 150°C, preferably from 80 to 130°C, and more preferably from 85-100 °C.

The thermal treatment can be carried out in several ways. According to one of these methods, the solid coming from step (b) may be suspended in an inert diluent like a hydrocarbon and then subjected to the heating while maintaining the system under stirring.

According to an alternative technique, the solid can be heated in a dry state by inserting it in a device having jacketed heated walls. Stirring can be provided by means of mechanical stirrers placed within the device by using rotating devices such as magnetic stirrers.

According to a still further embodiment, the solid produced in step (b) can be heated by subjecting it to a flow of hot inert gas such as nitrogen, while optionally maintaining the solid under fluidization conditions.

In some embodiments, the heating time is not fixed but may vary depending on conditions such as the maximum temperature reached. The heating time may range, in certain embodiments, from 0.1-10 hours, including from 0.5-6 hours. Those skilled in the art understand that higher temperatures could allow the heating time to be shorter while lower temperatures may cause longer reaction times.

In the process as described herein, each of steps (b)-(c) can be carried out immediately after the previous step, without the need for isolating the solid product coming from the previous step. However, if desired the solid product coming from one step can be isolated and washed before being subjected to the subsequent step.

After the activation step with compounds (ii) and (iii), the pre-activated catalyst (A) can be contacted with a catalyst component (B) in order to complete the activation and form the final catalyst system used to polymerize olefins.

The catalyst component (B) (also called the cocatalyst) is selected from Al-alkyl compounds that are optionally halogenated. In some embodiments, is the cocatalyst is selected from Al-trialkyl compounds, for example Al-trimethyl, Al-triethyl , Al-tri-n-butyl , and Al-triisobutyl compounds. In certain embodiments, the Al/Ti ratio is higher than 1, such as from 5-800.

The contact between the preactivated catalyst and the catalyst component (B) can take place according to several different embodiments. For example, the two components can be fed separately into the polymerization reactor under polymerization conditions. In another embodiment, the components can be mixed upfront and then fed together into the polymerization reactor.

According to one embodiment, ethylene, optionally in a mixture with C₃-C₈ alpha-olefins, is polymerized in gas phase in the further presence of the catalyst of the present disclosure.

The gas-phase polymerization process of the present disclosure can be carried out at a temperature ranging from 60-130 °C, preferably from 70 to 110 °C, in any type of gas-phase reactor. The total pressure of the gas-phase reactor may range from 10-40 bar, including from 15-35 bar. The fluidizing inert gas may comprise any inert gas described herein, including nitrogen and propane. Hydrogen may be used as a molecular weight regulator.

The gas-phase reactor can be a fluidized bed reactor such as those disclosed in U.S. Pat. Nos. 6,187,866 and 4,482,687. In certain embodiments, two reactors in series can be employed to carry out the polymerization.

According to one embodiment, a gas-phase process for the polymerization of olefins comprises the following steps in any mutual order:
a) polymerizing ethylene, optionally together with one or more comonomers, in a gas-phase reactor in the presence of hydrogen and a catalyst system according to the present disclosure; and
b) polymerizing ethylene optionally with one or more comonomers in another gas-phase reactor in the presence of hydrogen and the catalysts system of step (a);

where in at least one of said gas-phase reactors the growing polymer particles flow upward through a first polymerization zone (riser) under fast fluidization or transport conditions, leave the riser and enter a second polymerization zone (downcomer) through which they flow downward under the action of gravity, leave the downcomer and are reintroduced into the riser for establishing a circulation of polymer between the two polymerization zones.
In the first polymerization zone (the riser), fast fluidization conditions may be established by feeding a gas mixture comprising one or more olefins (*i.e.*, ethylene and comonomer(s)) at a velocity higher than the transport velocity of the polymer particles. The velocity of the gas mixture may be 0.5-15 m/s, including 0.8-5 m/s. The terms "transport velocity" and "fast fluidization conditions" are described, for example, in D. Geldart, Gas Fluidisation Technology, , J. Wiley & Sons Ltd., (1986).

In the second polymerization zone (the downcomer), the polymer particles flow under the action of gravity in a densified form such that high density values are reached (as defined by mass of polymer per volume of reactor), which approaches the bulk density of the polymer. In other words, the polymer flows vertically down through the downcomer in a plug flow (packed flow mode), so that small quantities of gas are entrained between the polymer particles.

In addition to the ethylene homo- and copolymers mentioned above, the catalysts of the present disclosure can also be used for preparing very-low-density and ultra-low-density polyethylenes (VLDPE and ULDPE, respectively) having densities of 0.880-0.920g/cm³ and consisting of ethylene copolymers with one or more alpha-olefins comprising 3-12 carbon atoms, a molar content of units derived from ethylene of higher than 80%, and elastomeric copolymers of ethylene and propylene and elastomeric terpolymers of ethylene and propylene with smaller proportions of a diene having a content by weight of units derived from ethylene of about 30-70%.

The following examples are given in order to further describe the present disclosure in a non-limiting manner.

### EXAMPLES

### CHARACTERIZATIONS

The properties are determined according to the following methods:

| | |
|---|---|
| MIE flow index: | ASTM-D 1238 condition E |
| Bulk densitv: | DIN-53194 |

### Example 1-2 and Comparative Examples C1-C3

The polymerization process was carried out in a plant working continuously and equipped with a pre-activation section in which the catalyst components are mixed to form the catalytic system, and one fluidized bed reactor (*polymerization reactor*) kept under fluidization conditions with propane for receiving the catalyst mixture coming from the stirred vessel.

In the preactivation vessel, a solid catalyst component prepared according to Example 2 of WIPO Pat. App. Pub. No. WO 2012/025379 is first contacted in liquid propane with tri-n-hexyl aluminum (THA). Subsequently, diethyl aluminum chloride (DEAC) is added to the previously formed mixture. The specific amounts of reactants, stirring times and temperatures are reported in Table 1.

The resulting catalytic system was fed, via liquid propane, from the pre-activation section to the gas-phase fluidized bed reactor together with the monomer feed. Also, TEAL cocatalyst was fed to the reactor via a separate line. The operating conditions are reported in Table 1. The polymer discharged from the final reactor was first transferred to the steaming section and then dried at 70 °C under a nitrogen flow and weighed. The polymer properties are reported in Table 1.

**Table 1**

| EXAMPLE | | | C1 | 1 | 2 | C2 | C3 |
|---|---|---|---|---|---|---|---|
| **PAS** | T | °C | 40 | 40 | 40 | 40 | 40 |
| | Time | min | 144 | 144 | 144 | 107 | 107 |
| | THA/cat | wt/wt | 0.32 | 0.32 | 0.32 | 0.32 | 0.20 |
| | THA/THF | mol | 0.25 | 0.23 | 0.24 | 0.25 | 0.15 |
| | T | °C | 40 | 40 | 40 | 40 | 40 |
| | Time | min | 90 | 90 | 90 | 80 | 80 |
| | DEAC/cat | wt/wt | 0.25 | 0.13 | 0.08 | 0.25 | 0.25 |
| | DEAC/THF | mol | 0.45 | 0.23 | 0.14 | 0.45 | 0.45 |
| | THA+DEAC/THF | Mol ratio | 0.7 | 0.46 | 0.38 | 0.7 | 0.60 |
| **FBR** | T | °C | 86 | 86 | 86 | 86 | 86 |
| | P | bar | 21 | 21 | 21 | 21 | 21 |
| | TEAL/cat | wt/wt | 2.4 | 2.4 | 2.4 | 2.1 | 2.2 |
| | C₂⁻ | %mol | 32.4 | 31.6 | 23.8 | 40.7 | 41.4 |
| | H₂/C₂⁻ | mol ratio- | 0.28 | 0.30 | 0.38 | 0.26 | 0.27 |
| | C6⁻/(C6⁻+C2⁻) | mol ratio | 0.02 | 0.02 | 0.02 | 0.040 | 0.040 |
| | Spec. Mileage | g/(g*h*bar) | 418 | 646 | 1308 | 706 | 831 |
| | MIE | g/10' | 1.95 | 2.16 | 2.19 | 2.22 | 1.96 |
| | PBD | g/cc | 0.415 | 0.432 | 0.460 | 0.345 | 0.343 |

As evidenced by the above inventive examples, the use of the specific pre-activation ratio described in the application resulted in increased polymerization activity while maintaining the beneficial polymer properties.

## Claims

1. A process for activating a catalyst for the polymerization of olefins comprising :
(a) contacting a solid catalyst component (i) comprising a titanium compound, a magnesium compound and an ether compound with (ii) an aluminum compound of the general formula AlR₃, in which R is a C₁-C₁₀ linear or branched alkyl compound;
(b) contacting the product from step (a) with an aluminum compound (iii) of the general formula AlClₙR₃₋ₙ, in which n ranges from 1 to less than 3 and R is a C₁-C₁₀ linear or branched alkyl compound, and comprising a molar ratio between the aluminum compound (iii) and the aluminum compound (ii) of 2.5 or less, and a molar ratio between the sum of aluminum compound (ii) and (iii) and the ether present in the solid catalyst component (i) of equal to, or lower than, 0.6.

2. The process of claim 1, where the aluminum compound (ii) of the general formula AlR₃ is selected from compounds in which R is a C₁-C₈ alkyl.

3. The process of claim 2, where the aluminum compound (ii) is selected from tri-n-hexyl aluminum and tri-n-octyl aluminum.

4. The process of claim 1, where the aluminum compound (iii) of the general formula AlClₙR₃₋ₙ is selected from compounds in which n ranges from 1-2 and R is a C₁-C₄ alkyl group.

5. The process of claim 4, where the aluminum compound (ii) is selected from ethylaluminum dichloride, diethylaluminum chloride and ethylaluminum sesquichloride.

6. The process of claim 1, where the molar ratio of compounds (iii)/(ii) ranges from 1 to 2.3.

7. The process of claim 1, where the molar ratio between the sum of aluminum compound (ii) and (iii) and the ether present in the solid catalyst component (i) ranges from 0.30 to 0.55.

8. The process of claims 6 and 7, where the molar ratio between the sum of aluminum compound (ii) and (iii) and the ether present in the solid catalyst component (i) ranges from 0.46 to 0.55 and the molar ratio of compounds (iii)/(ii) ranges from 1 to 1.5.

9. The process of claims 6 and 7, where the molar ratio between the sum of aluminum compound (ii) and (iii) and the ether present in the solid catalyst component (i) ranges from 0.35 to 0.45 and the molar ratio of compounds (iii)/(ii) ranges from 1.6 to 2.

10. The process according to any of the preceding claims in which the aluminum compound (ii) is tri-n-hexyl aluminum and the aluminum compound (iii) is diethylaluminum chloride.

11. The process of claim 1, wherein the contact of step (a) is carried out for a period of time ranging from 20 to 400 minutes at a temperature ranging from 0 to 90 °C, and the contact of step (b) is carried out for a period of time shorter than that of step (a) at a temperature ranging from 0 to90 °C.

12. The process according to any of the preceding claims, where the solid catalyst component (i) comprises a titanium compound comprising the general formula Ti(OR^{I})ₘX_{y-m}, where m is 0-0.5 inclusive, y is the valence of titanium, R^{I} is an alkyl, cycloalkyl or aryl radical having 1-8 carbon atoms, X is a halogen and the ether (E) is selected from cyclic alkyl ethers having 2-6 carbon atoms.

13. The process of claim 12, where, in the solid catalyst component (i) the molar ratio Mg/Ti ranges from 7 to 50 and the (E)/Ti molar ratios ranges from 4 to 20.

14. A process for the polymerization of ethylene, optionally in a mixture with C₃-C₈ alpha-olefins, carried out in the presence of a catalyst system comprising an activated catalyst (A) prepared according to the process of one or more of claims 1-13, and a catalyst component (B) selected from Al-alkyl compounds.

15. The process according to claim 14, carried out in gas-phase.

## Patentansprüche

1. Verfahren zur Aktivierung eines Katalysators zur Polymerisation von Olefinen, umfassend:
(a) Kontaktieren einer festen Katalysatorkomponente (i), die eine Titanverbindung, eine Magnesiumverbindung und eine Etherverbindung umfasst, mit (ii) einer Aluminiumverbindung mit der allgemeinen Formel AlR₃, in der R eine lineare oder verzweigte C₁- bis C₁₀-Alkylverbindung ist;
(b) Kontaktieren des Produkts aus Schritt (a) mit einer Aluminiumverbindung (iii) mit der allgemeinen Formel AlClₙR₃₋ₙ, in der n im Bereich von 1 bis weniger als 3 liegt und R eine lineare oder verzweigte C₁- bis C₁₀-Alkylverbindung ist, und umfassend ein Molverhältnis zwischen der Aluminiumverbindung (iii) und der Aluminiumverbindung (ii) von 2,5 oder weniger und ein Molverhältnis zwischen der Summe der Aluminiumverbindung (ii) und (iii) und dem in der festen Katalysatorkomponente (i) vorhandenen Ether gleich oder kleiner als 0,6.

2. Verfahren nach Anspruch 1, wobei die Aluminiumverbindung (ii) mit der allgemeinen Formel AlR₃ ausgewählt ist aus Verbindungen, in denen R ein C₁- bis C₈-Alkyl ist.

3. Verfahren nach Anspruch 2, wobei die Aluminiumverbindung (ii) ausgewählt ist aus Tri-n-hexylaluminium und Tri-n-octylaluminium.

4. Verfahren nach Anspruch 1, wobei die Aluminiumverbindung (iii) mit der allgemeinen Formel AlClₙR₃₋ₙ ausgewählt ist aus Verbindungen, in denen n im Bereich von 1 bis 2 liegt und R eine C₁- bis C₄-Alkylgruppe ist.

5. Verfahren nach Anspruch 4, wobei die Aluminiumverbindung (ii) ausgewählt ist aus Ethylaluminiumdichlorid, Diethylaluminiumchlorid und Ethylaluminiumsesquichlorid.

6. Verfahren nach Anspruch 1, wobei das Molverhältnis der Verbindungen (iii)/(ii) im Bereich von 1 bis 2,3 liegt.

7. Verfahren nach Anspruch 1, wobei das Molverhältnis zwischen der Summe der Aluminiumverbindung (ii) und (iii) und dem in der festen Katalysatorkomponente (i) vorhandenen Ether im Bereich von 0,30 bis 0,55 liegt.

8. Verfahren nach den Ansprüchen 6 und 7, wobei das Molverhältnis zwischen der Summe der Aluminiumverbindung (ii) und (iii) und dem in der festen Katalysatorkomponente (i) vorhandenen Ether im Bereich von 0,46 bis 0,55 liegt und das Molverhältnis der Verbindungen (iii)/(ii) im Bereich von 1 bis 1,5 liegt.

9. Verfahren nach den Ansprüchen 6 und 7, wobei das Molverhältnis zwischen der Summe der Aluminiumverbindung (ii) und (iii) und dem in der festen Katalysatorkomponente (i) vorhandenen Ether im Bereich von 0,35 bis 0,45 liegt und das Molverhältnis der Verbindungen (iii)/(ii) im Bereich von 1,6 bis 2 liegt.

10. Verfahren nach einem der vorhergehenden Ansprüche, wobei die Aluminiumverbindung (ii) Tri-n-hexylaluminium ist und die Aluminiumverbindung (iii) Diethylaluminiumchlorid ist.

11. Verfahren nach Anspruch 1, wobei der Kontakt von Schritt (a) für einen Zeitraum im Bereich von 20 bis 400 Minuten bei einer Temperatur im Bereich von 0 bis 90 °C durchgeführt wird, und der Kontakt von Schritt (b) für einen Zeitraum, der kürzer als derjenige von Schritt (a) ist, bei einer Temperatur im Bereich von 0 bis 90 °C durchgeführt wird.

12. Verfahren nach einem der vorhergehenden Ansprüche, wobei die feste Katalysatorkomponente (i) eine Titanverbindung umfasst, die die allgemeine Formel Ti(OR^{I})ₘX_{y}-ₘ aufweist, wobei m 0 bis 0,5 einschließlich ist, y die Wertigkeit von Titan ist, R^{I} ein Alkyl-, Cycloalkyl- oder Arylrest mit 1 bis 8 Kohlenstoffatomen ist, X ein Halogen ist, und der Ether (E) ausgewählt ist aus cyclischen Alkylethern mit 2 bis 6 Kohlenstoffatomen.

13. Verfahren nach Anspruch 12, wobei in der festen Katalysatorkomponente (i) das Molverhältnis Mg/Ti im Bereich von 7 bis 50 liegt, und die (E)/Ti-Molverhältnisse im Bereich von 4 bis 20 liegen.

14. Verfahren für die Polymerisation von Ethylen, gegebenenfalls in einer Mischung mit C₃- bis C₈-alpha-Olefinen, das in Gegenwart eines Katalysatorsystems durchgeführt wird, umfassend einen aktivierten Katalysator (A), der nach dem Verfahren gemäß einem oder mehreren der Ansprüche 1 bis 13 durchgeführt wird, und eine Katalysatorkomponente (B) ausgewählt aus Al-Alkylverbindungen.

15. Verfahren nach Anspruch 14, das in der Gasphase durchgeführt wird.

## Revendications

1. Procédé d'activation d'un catalyseur pour la polymérisation d'oléfines comprenant :
(a) la mise en contact d'un constituant catalytique solide (i) comprenant un composé de titane, un composé de magnésium et un composé de type éther avec (ii) un composé d'aluminium de formule générale AlR₃, dans laquelle R représente un composé alkyle linéaire ou ramifié en C₁-C₁₀ ;
(b) la mise en contact du produit de l'étape (a) avec un composé d'aluminium (iii) de formule générale AlClₙR₃₋ₙ, dans laquelle n est situé dans la plage de 1 à moins de 3 et R représente un composé alkyle linéaire ou ramifié en C₁-C₁₀ et présentant un rapport molaire entre le composé d'aluminium (iii) et le composé d'aluminium (ii) de 2,5 ou moins et un rapport molaire entre la somme des composés d'aluminium (ii) et (iii) et l'éther présent dans le constituant catalytique solide (i) égal ou inférieur à 0,6.

2. Procédé selon la revendication 1, le composé d'aluminium (ii) de formule générale AlR₃ étant choisi parmi les composés dans lesquels R représente alkyle en C₁-C₈.

3. Procédé selon la revendication 2, le composé d'aluminium (ii) étant choisi parmi le tri-n-hexylaluminium et le tri-n-octylaluminium.

4. Procédé selon la revendication 1, le composé d'aluminium (iii) de formule générale AlClₙR₃₋ₙ étant choisi parmi les composés dans lesquels n est situé dans la plage de 1 à 2 et R représente un groupe alkyle en C₁-C₄.

5. Procédé selon la revendication 4, le composé d'aluminium (ii) étant choisi parmi le dichlorure d'éthylaluminium, le chlorure de diéthylaluminium et le sesquichlorure d'éthylaluminium.

6. Procédé selon la revendication 1, le rapport molaire des composés (iii)/(ii) étant situé dans la plage de 1 à 2,3.

7. Procédé selon la revendication 1, le rapport molaire entre la somme des composés d'aluminium (ii) et (iii) et l'éther présent dans le constituant catalytique solide (i) étant situé dans la plage de 0,30 à 0,55.

8. Procédé selon les revendications 6 et 7, le rapport molaire entre la somme des composés d'aluminium (ii) et (iii) et l'éther présent dans le constituant catalytique solide (i) étant situé dans la plage de 0,46 à 0,55 et le rapport molaire des composés (iii)/(ii) étant situé dans la plage de 1 à 1,5.

9. Procédé selon les revendications 6 et 7, le rapport molaire entre la somme des composés d'aluminium (ii) et (iii) et l'éther présent dans le constituant catalytique solide (i) étant situé dans la plage de 0,35 à 0,45 et le rapport molaire des composés (iii)/(ii) étant situé dans la plage de 1,6 à 2.

10. Procédé selon l'une quelconque des revendications précédentes, le composé d'aluminium (ii) étant le tri-n-hexylaluminium et le composé d'aluminium (iii) étant le chlorure de diéthylaluminium.

11. Procédé selon la revendication 1, la mise en contact de l'étape (a) étant mise en œuvre pendant une durée située dans la plage de 20 à 400 minutes à une température située dans la plage de 0 à 90 °C et la mise en contact de l'étape (b) étant mise en œuvre pendant une durée inférieure à celle de l'étape (a) à une température située dans la plage de 0 à 90 °C.

12. Procédé selon l'une quelconque des revendications précédentes, le constituant catalytique solide (i) comprenant un composé de titane présentant la formule générale Ti(OR^{I})ₘX_{y-m}, où m représente 0 et 0,5, valeurs extrêmes incluses, y représente la valence du titane, R^{I} représente un radical alkyle, cycloalkyle ou aryle comprenant 1 à 8 atomes de carbone, X représente un halogène et l'éther (E) est choisi parmi les éthers alkyliques cycliques comprenant 2 à 6 atomes de carbone.

13. Procédé selon la revendication 12, où, dans le constituant catalytique solide (i), le rapport molaire Mg/Ti est situé dans la plage de 7 à 50 et les rapports molaires (E)/Ti sont situés dans la plage de 4 à 20.

14. Procédé de polymérisation d'éthylène, éventuellement en mélange avec des alpha-oléfines en C₃-C₈, mis en œuvre en présence d'un système catalytique comprenant un catalyseur activé (A) préparé selon le procédé selon l'une ou plusieurs des revendications 1-13 et un constituant catalytique (B) choisi parmi les composés d'Al-alkyle.

15. Procédé selon la revendication 14, mis en œuvre en phase gazeuse.
